# FASCICULE DE BREVET EUROPEEN

(11) **EP 0 926 974 B1**
(45) Date de publication et mention de la délivrance du brevet: **29.11.2000**
(21) Numéro de dépôt: 97937633.2
(22) Date de dépôt: 18.08.1997
(51) Int. Cl.: A47J 31/50, A47G 19/14

(54) **APPAREIL A INFUSION**
BRÜHGETRÄNKEVORRICHTUNG
INFUSING APPARATUS

(30) Priorité: 02.09.1996 FR 9610682
(43) Date de publication de la demande: 07.07.1999
(73) Titulaire: Moulinex S.A., 14123 Cormelles Le Royal (FR)
(72) Inventeur: GEROULT, Marc, F-61000 Alençon (FR); JOUATEL, Christian, Bernard, F-61250 Radon (FR)
(74) Mandataire: Busquets, Jean-Pierre
(86) Numéro de dépôt international: FR9701496
(87) Numéro de publication internationale: WO9809558

(56) Documents cités:
- DE-A- 4 428 471
- US-A- 4 924 922
- US-A- 5 265 767

## Description

La présente invention concerne un appareil à infusion du type comportant une verseuse collectrice d'infusion susceptible d'être placée sous l'orifice de sortie d'une chambre d'infusion, ladite verseuse présentant un couvercle muni d'une ouverture par laquelle pénètre l'infusion, et d'un obturateur de ladite ouverture pour notamment conserver l'infusion collectée à une température optimale, des moyens d'actionnement de l'obturateur étant en outre prévus en vue de libérer automatiquement l'ouverture sous l'action d'une butée solidaire de l'appareil, lors de la mise en place de la verseuse sous ledit orifice de sortie.

Un domaine d'application particulier de l'invention est celui des cafetières ou théières électriques ménagères.

Dans les appareils à infusion connus du type précédent, le couvercle de la verseuse se présente sous la forme d'un bouchon que l'on vient visser sur les bords de l'ouverture centrale de la verseuse. Le bouchon comporte une ouverture, également centrale, pour le passage de l'infusion depuis la chambre d'infusion vers la verseuse. L'obturateur de l'ouverture centrale du bouchon est constitué par un clapet monté mobile en translation sur le bouchon de manière à venir s'appliquer contre les bords de l'ouverture par le dessous du bouchon. Lorsque la verseuse est mise en place sur l'appareil, une butée, présente généralement sur la partie inférieure de la chambre d'infusion, vient appuyer sur des moyens d'actionnement du clapet de manière à éloigner, dans un mouvement de translation, le clapet de l'ouverture, et permettre le passage de l'infusion dans la verseuse.

Lorsque l'utilisateur désire extraire de la verseuse l'infusion collectée, il doit au préalable dévisser le bouchon de manière à laisser un espace suffisant entre le bouchon et les bords de la verseuse pour le passage de l'infusion.

Un inconvénient de ce type d'appareil réside dans la manipulation complexe de la verseuse.

En effet, l'action de verser l'infusion collectée dans une tasse ou autre est souvent malaisée, car un utilisateur doit obligatoirement se servir de ses deux mains, et doit en outre prendre soin de ne pas trop dévisser le bouchon, sous peine d'avoir un débit de liquide infusé trop important, voire l'échappement complet du bouchon en fin de course et toutes les fâcheuses conséquences qui s'en suivent.

Par ailleurs, l'utilisateur doit obligatoirement penser à revisser le bouchon s'il veut conserver le reste de l'infusion collectée à une température optimale, ou bien s'il désire replacer la verseuse sur la machine.

D'autre part, dans le cas où la verseuse est du type isotherme, l'ampoule en verre est fragile et ne doit subir aucune contrainte axiale importante.

On connaît également des verseuses pour appareils à infusion, du type décrit dans la demande de brevet DE-A-44 28 471, qui comportent des moyens d'ouverture actionnés automatiquement pour son remplissage, et manuellement dans la phase de versage. Ces moyens mettent en jeu des pièces mécaniques et un montage complexes.

Le but de la présente invention est de proposer un appareil à infusion d'utilisation simple, dont les moyens d'actionnement de l'obturateur sont susceptibles d'être également commandés manuellement en vue de libérer l'ouverture et permettre l'extraction de l'infusion collectée dans la verseuse par ladite ouverture.

Plus précisément, un appareil à infusion selon l'invention se caractérise en ce que le couvercle comporte lesdits moyens d'actionnement comprenant une pièce unique susceptible d'être mise en mouvement soit manuellement, soit automatiquement lors de la mise en place de la verseuse sous l'orifice de sortie, et d'actionner l'obturateur (4 à 7) lors de sa mise en mouvement.

Ainsi, pour un appareil à infusion conforme à l'invention, le passage de l'infusion, soit de la chambre d'infusion à la verseuse, soit de la verseuse à un récipient de type tasse, s'effectue toujours par la même ouverture, et est rendu possible en agissant soit automatiquement, soit manuellement, sur des moyens d'actionnement communs de l'obturateur, simples et économiques.

La présente invention, ainsi que les avantages qu'elle procure, seront mieux compris au vu de la description ci-après, faite en référence aux figures annexées, dans lesquelles :
- la figure 1 illustre, en coupe longitudinale, une verseuse en position dite de repos (ouverture obturée) selon un premier mode de réalisation possible conforme à l'invention ;
- la figure 2 illustre la partie supérieure de la verseuse de la figure 1, en coupe longitudinale, et partiellement la chambre d'infusion de l'appareil sous laquelle la verseuse est placée pour le mode de commande automatique des moyens d'actionnement ;
- la figure 3 illustre la partie supérieure de la verseuse de la figure 1, vue en coupe longitudinale, et le mode de commande manuel des moyens d'actionnement ;
- les figures 4 et 5 illustrent, en coupe, la partie supérieure d'une verseuse selon un deuxième mode de réalisation possible conforme à l'invention, en modes de commande respectivement automatique et manuel des moyens d'actionnement de l'obturateur ;
- les figures 6 et 7 illustrent, en coupe, la partie supérieure d'une verseuse selon un troisième mode de réalisation possible conforme à l'invention, respectivement en position de repos et en mode de commande manuel ou automatique des moyens d'actionnement de l'obturateur.

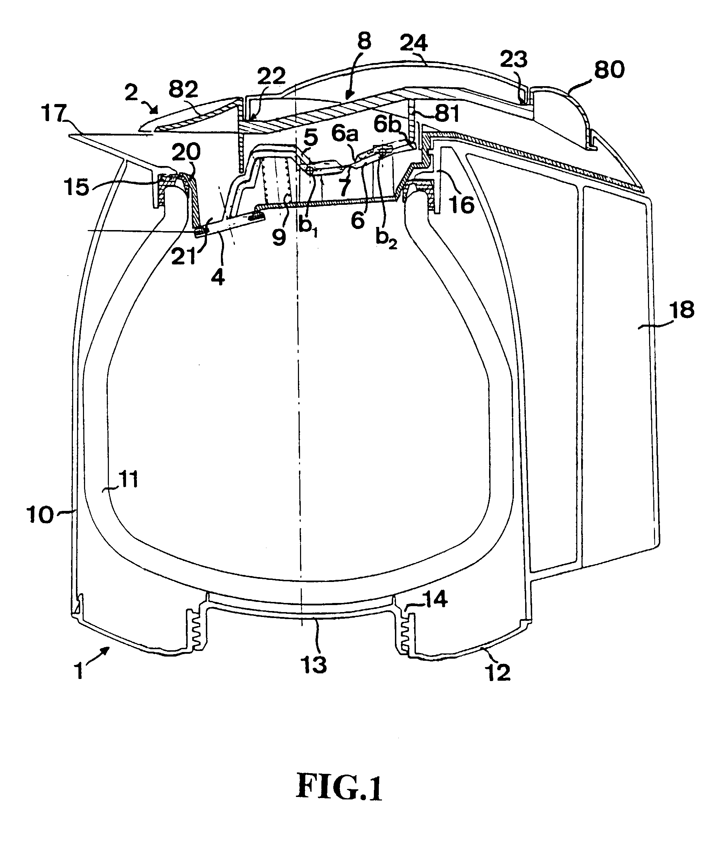

Un premier mode de réalisation possible d'un appareil à infusion selon l'invention va maintenant être décrit en référence aux figures 1 à 3.

La verseuse 1 représentée sur la figure 1 à titre d'exemple non limitatif est une verseuse de type isotherme comprenant une enveloppe 10 à l'intérieur de laquelle est placée une ampoule isotherme 11, de préférence en verre. La verseuse 1 est délimitée dans sa partie inférieure par un fond 12, de préférence clipsé sur l'enveloppe 10. Un vérin 13, vissé dans une ouverture 14 pratiquée dans le fond 12, permet de bloquer l'ampoule 11 contre un joint d'étanchéité 15 placé entre l'enveloppe 10 de la verseuse et l'ampoule isotherme 11.

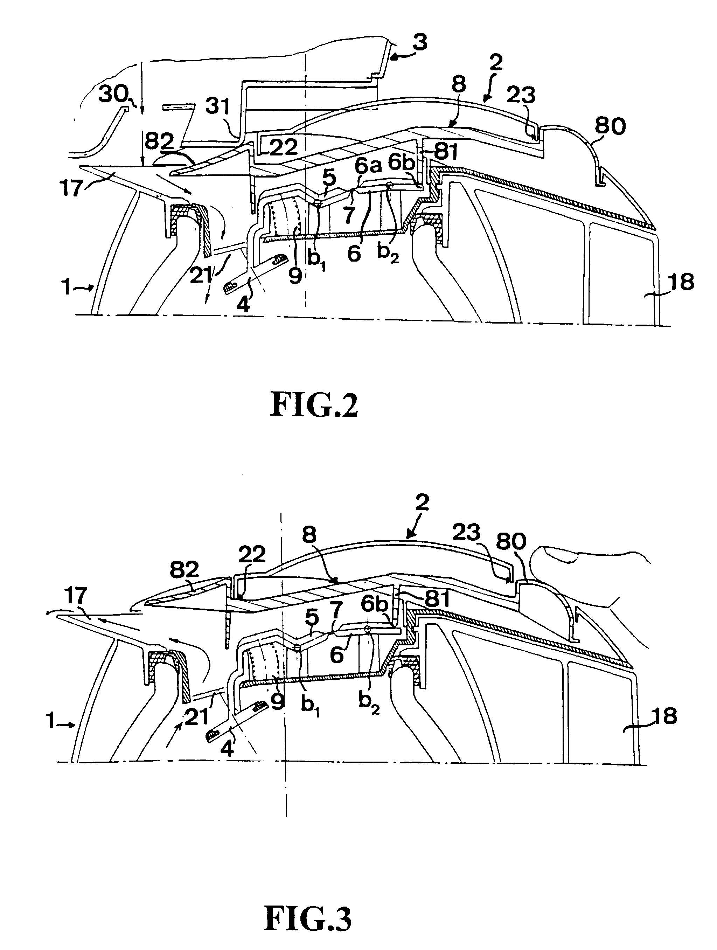

La verseuse 1 comporte par ailleurs un couvercle 2 dont le corps 20 est fixé, de préférence vissé, sur la partie supérieure 16 de l'enveloppe 10, de façon à fermer l'accès à l'intérieur de l'ampoule. Comme on le voit sur les figures, le couvercle 2 est muni d'une ouverture 21 pour le passage de l'infusion, soit depuis l'orifice de sortie 30 d'une chambre d'infusion 3 vers l'intérieur de la verseuse (figure 2), soit pour l'extraction de l'infusion collectée (figure 3). L'ouverture 21 est avantageusement située en regard d'un bec verseur 17 de la verseuse 1. Une poignée latérale 18 est fixée sur l'enveloppe 10 de la verseuse, du côté opposé au bec verseur 17.

En vue notamment de conserver l'infusion recueillie dans la verseuse 1 à une température optimale, le couvercle 2 comporte par ailleurs un obturateur de l'ouverture 21.

Dans l'exemple de réalisation préférentiel, l'obturateur comporte un clapet 4 venant s'appliquer contre les bords de l'ouverture 21, par le dessous de cette ouverture 21.

Le clapet 4 est relié mécaniquement au couvercle 2 au travers de l'ouverture 21 par l'intermédiaire d'un premier bras 5 monté pivotant autour d'un premier axe de rotation b₁ porté par le couvercle 2, et d'un second bras 6 monté également pivotant autour d'un second axe b₂ porté par le couvercle. Une extrémité 6a du second bras 6 est reliée au premier bras 5 par l'intermédiaire d'une articulation 7. La seconde extrémité 6b du bras 6 est par ailleurs libre. Le couvercle 2 comporte de préférence des moyens élastiques permettant de maintenir le clapet 4 dans la position de repos représentée sur la figure 1, dans laquelle l'ouverture est obturée. Les moyens élastiques peuvent être constitués, comme représentés sur les figures, d'un ressort 9 présentant une extrémité reliée au premier bras 5, entre le clapet 4 et l'axe b₁, et une extrémité reliée au corps 20 du couvercle 2.

Les bras 5 et 6 ainsi que l'articulation 7 sont constitués en une seule pièce de matériau plastique, l'articulation 7 étant réalisée par un amincissement localisé de ladite pièce.

Pour agir sur l'obturateur en vue de libérer l'ouverture, le couvercle 2 comporte en outre, des moyens d'actionnement comprenant de préférence une pièce unique susceptible d'être mise en mouvement soit manuellement, soit automatiquement lors de la mise en place de la verseuse sous l'orifice de sortie 30 de la chambre d'infusion 3 (figure 2).

Dans son mouvement, la pièce va entraîner le clapet 4 loin de l'ouverture 21.

La pièce représentée sur les figures 1 à 3 consiste en un levier 8 monté flottant, de préférence s'étendant longitudinalement entre le bec verseur 17 et la poignée 18 de la verseuse, au-dessus de la chaîne articulée comportant le premier bras 5 et le second bras 6. Le levier 8 comporte une première zone d'appui 80 pour sa mise en mouvement manuelle, et une seconde zone d'appui 82 pour la mise en mouvement automatique. En outre, le levier comporte un ergot 81 situé entre les deux zones d'appui 80,82. Cet ergot 81 s'étend latéralement par rapport à l'axe longitudinal du levier de manière à venir exercer une force sur l'extrémité libre 6b du second bras 6 suite à une pression sur l'une quelconque des zones d'appui 80 ou 82.

Le couvercle 2 comprend deux points de butée 22,23 situés de part et d'autre de l'ergot 81 et formant alternativement pivot pour le levier 8 selon que l'on exerce une pression sur la première ou la seconde zone d'appui.

Dans la position représentée sur la figure 1, le levier 8 est en contact avec les deux points d'appui 22,23 sous l'action de l'extrémité libre 6b du bras 6 repoussant l'ergot 81 vers le haut, ladite extrémité libre 6b exerçant une force de poussée verticale dirigée vers le haut sous l'action du ressort 9.

L'actionnement automatique de l'obturateur s'effectue, comme représenté sur la figure 2, par la mise en place de la verseuse 1 sous l'orifice de sortie 30 de la chambre d'infusion 3 représentée partiellement. Une butée 31, située ici dans la partie inférieure de la chambre d'infusion, vient exercer une pression vers le bas sur la zone d'appui 82. Le levier 8 s'éloigne du point d'appui 22, mais reste en contact avec le point d'appui 23 autour duquel il pivote légèrement. Ce mouvement de rotation amène l'ergot 81 à exercer une force verticale sur l'extrémité libre 6b du bras 6, entraînant cette extrémité libre vers le bas. Le bras 6 bascule en conséquence autour de l'axe b₂ et entraîne, du fait de l'articulation 7, le bras 5 dans un mouvement de rotation inversé autour de l'axe b₁, permettant au clapet 4 de s'éloigner de l'orifice 21. L'infusion peut alors s'écouler depuis l'orifice 30 dans la verseuse 1 au travers de l'ouverture 21, cet écoulement de l'infusion étant commandé également par la butée 31 selon un dispositif connu et non décrit ici.

Lorsque la verseuse 1 est retirée de l'appareil, le levier 8 revient automatiquement dans la position représentée sur la figure 1, grâce au ressort de rappel 9. L'ouverture 21 est alors obturée par le clapet 4, ce qui permet de conserver l'infusion collectée à bonne température.

Pour extraire l'infusion collectée de la verseuse, l'utilisateur doit exercer une pression, comme représenté sur la figure 3, sur la zone d'appui 80. Dans ce cas, le levier 8 s'éloigne du point d'appui 23, et reste en contact avec le point d'appui 22. Tout comme précédemment, la légère rotation résultante du levier 8 autour du point d'appui 22 amène l'ergot 81 à exercer une force verticale sur l'extrémité libre 6b du bras 6, de manière à éloigner le clapet 4 de l'ouverture. En inclinant simultanément la verseuse, l'utilisateur peut extraire l'infusion collectée via l'ouverture 21.

Comme on peut le voir sur les figures, la zone d'appui 80 pour l'actionnement manuel de l'obturateur est accessible par le dessus du couvercle 2, et est positionnée avantageusement au-dessus et à proximité de la poignée latérale 18. Ceci permet à l'utilisateur d'exercer facilement une pression sur la zone d'appui 80 tout en maintenant, par la même main, la verseuse 1 par la poignée. Dès lors que l'utilisateur relâche la zone d'appui 80, le levier 8 revient dans la position représentée sur la figure 1.

Dans l'exemple de réalisation illustré sur les figures 1 à 3, le levier 8 est monté flottant à l'intérieur du couvercle 2, et vient en appui sur les deux points d'appui 22 et 23 de la partie supérieure 24 du couvercle 2 (voir figure 1). Seules les zones d'appui 80 et 82 du levier sont accessibles par le dessus du couvercle 2, au travers d'ouvertures pratiquées dans la partie supérieure 24 du couvercle.

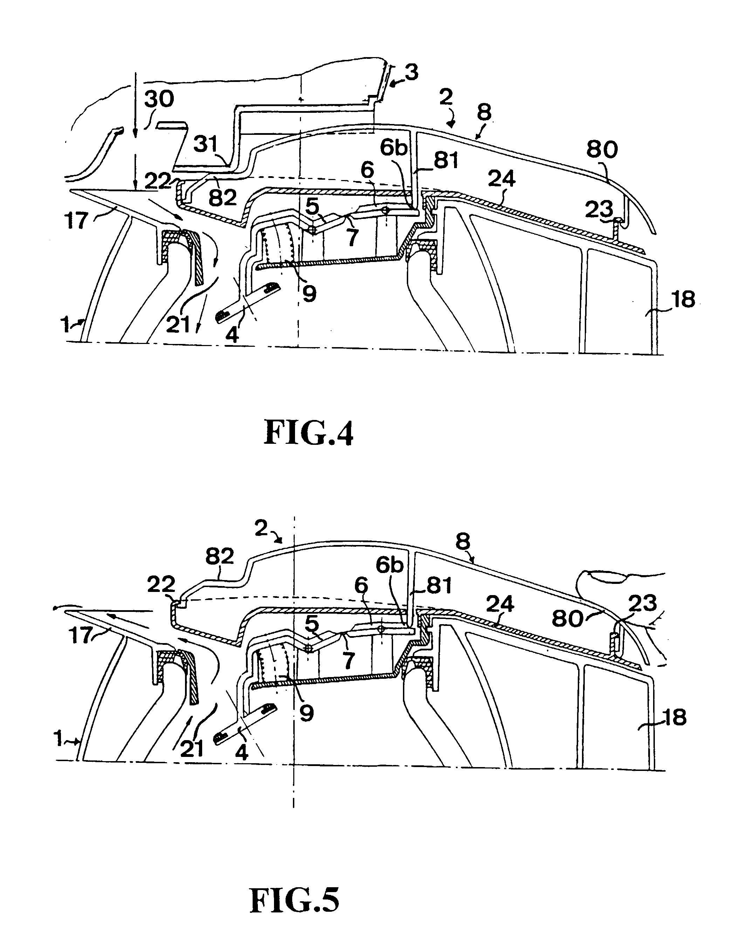

Dans la variante de réalisation représentée sur les figures 4 et 5, le levier flottant 8 est monté sur la partie supérieure 24 du couvercle. L'ergot 81 passe au travers d'une ouverture pratiquée dans cette partie supérieure 24, de façon à venir en prise avec l'extrémité libre du bras 6. Deux crochets du levier 8, susceptibles d'être en prise avec les points d'appui 22 et 23 du couvercle, permettent le maintien du levier 8 sur le couvercle.

Mise à part cette légère différence de structure du levier, le fonctionnement du mode de réalisation représenté sur les figures 4 et 5 est en tout point identique à celui décrit en référence aux figures 1 à 3.

Dans une variante de réalisation non représentée, le levier 8 pourrait être monté pivotant autour d'un axe solidaire du couvercle, cet axe étant placé entre les deux zones d'appui 80 et 82.

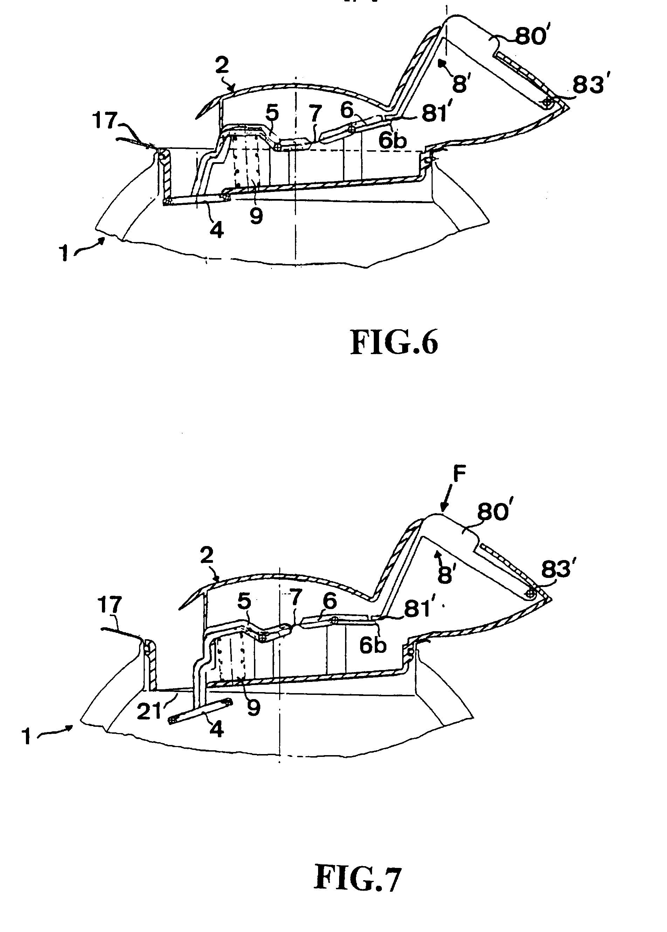

Les figures 6 et 7 illustrent partiellement, en coupe verticale, une verseuse 1 selon un autre mode de réalisation possible conforme à l'invention, dans lequel la pièce permettant l'actionnement de l'obturateur en vue de libérer l'ouverture 21 est constituée par une manette 8' montée pivotante en une extrémité 83' solidaire du couvercle 2. L'autre extrémité libre 81' de la manette 8' forme l'ergot venant en prise avec l'extrémité libre 6b du bras 6. La manette 8' présente une zone d'appui 80' unique pour commander l'obturateur par une force d'appui représentée par la flèche F sur la figure 7. Cette force F résulte soit de la pression manuelle d'un utilisateur, soit de la pression d'une butée (non représentée) solidaire de l'appareil à infusion et placée de préférence sur la face frontale de la chambre d'infusion. Sous l'action de cette force F, la manette pivote autour de son extrémité 83' de sorte que l'ergot 81' vienne appuyer sur l'extrémité 6b du bras 6, entraînant les rotations inversées des bras 5 et 6 et l'éloignement du clapet 4 de l'ouverture 21. En l'absence de force F, le clapet 4 revient dans la position de repos représentée sur la figure 6.

Grâce à l'invention, on comprend que l'on commande, de façon simple et économique, le clapet soi manuellement, soit automatiquement, lesdites pièces mécaniques utilisées pouvant être montées selon une autre cinématique sans pour autant sortir du cadre de l'invention.

## Revendications

1. Appareil à infusion du type comportant une verseuse (1) collectrice susceptible d'être placée sous l'orifice de sortie (30) d'une chambre d'infusion (3), ladite verseuse présentant un couvercle (2) muni d'une ouverture (21) par laquelle pénètre l'infusion, et d'un obturateur (4 à 7) de ladite ouverture pour notamment conserver l'infusion collectée à une température optimale, des moyens d'actionnement (8;8') de l'obturateur étant en outre prévus en vue de libérer automatiquement l'ouverture sous l'action d'une butée (31) solidaire de l'appareil, lors de la mise en place de la verseuse sous ledit orifice de sortie, lesdits moyens d'actionnement (8;8') étant susceptibles d'être également commandés manuellement en vue de libérer l'ouverture et permettant l'extraction de l'infusion collectée dans la verseuse par ladite ouverture,
**caractérisé en ce que** le couvercle (2) comporte lesdits moyens d'actionnement comprenant une pièce unique (8;8') susceptible d'être mise en mouvement soit manuellement, soit automatiquement lors de la mise en place de la verseuse sous l'orifice de sortie, et d'actionner l'obturateur (4 à 7) lors de sa mise en mouvement.

2. Appareil à infusion selon la revendication 1,
**caractérisé en ce que**, la verseuse collectrice d'infusion (1) comportant un bec verseur (17) en regard duquel est située ladite ouverture (21), ledit obturateur (4 à 7) comprend un clapet (4) placé à l'intérieur de la verseuse (1) sous l'ouverture (21) et relié mécaniquement au couvercle (2) au travers de l'ouverture par l'intermédiaire d'un premier bras (5) monté pivotant dans le couvercle autour d'un premier axe de rotation (b₁), et d'un second bras (6) monté également pivotant dans le couvercle autour d'un second axe de rotation (b₂), ledit second bras (6) comportant une première extrémité (6a) reliée au premier bras par une articulation (7) et une seconde extrémité (6b) libre ; et en ce que ladite pièce unique (8;8') comporte au moins une première zone d'appui (80;80') pour la mise en mouvement manuelle de la pièce, et un ergot (81;81') venant exercer, lors de la mise en mouvement de ladite pièce, une force sur la seconde extrémité libre (6b) du second bras (6) de façon à imprimer auxdits premier et second bras deux mouvements de rotation inversés éloignant le clapet (4) de l'ouverture (21).

3. Appareil à infusion selon la revendication 2,
**caractérisé en ce que**, la verseuse collectrice comprenant une poignée latérale (18) sur un côté de la verseuse opposé audit bec verseur (17), ladite première zone d'appui (80;80') est accessible par le dessus du couvercle (2) et située au-dessus et à proximité de ladite poignée latérale (18) de manière à permettre à l'utilisateur d'exercer une pression sur ladite première zone d'appui (80;80') tout en maintenant la verseuse par la poignée.

4. Appareil à infusion selon la revendication 3,
**caractérisé en ce que** la pièce unique consiste en un levier (8) monté flottant, s'étendant longitudinalement entre le bec verseur (17) et la poignée (18) de la verseuse, au-dessus du premier (5) et du second (6) bras, en ce que le levier comporte, du côté du bec verseur (17), une seconde zone d'appui (82) sur laquelle ladite butée (31) vient exercer une pression lors de la mise en place de la verseuse sur l'appareil ; et en ce que ledit ergot (81) est situé entre lesdites première et seconde zones d'appui (80,82) et s'étend latéralement par rapport à l'axe longitudinal du levier de manière à venir exercer ladite force sur la seconde extrémité libre (6b) du second bras suite à une pression sur l'une quelconque des première ou seconde zones d'appui.

5. Appareil à infusion selon la revendication 4,
**caractérisé en ce que** le couvercle (2) comprend deux points de butée (22;23) situés de part et d'autre de l'ergot (81) et formant alternativement pivot pour le levier (8) selon que l'on exerce une pression sur la première ou la seconde zone d'appui.

6. Appareil à infusion selon l'une quelconque des revendications 2 ou 3,
**caractérisé en ce que** la butée (31) est située sur l'appareil de manière à pouvoir exercer une pression sur ladite première zone d'appui (80;80') lors de la mise en place de la verseuse sous l'orifice de sortie (30) de la chambre d'infusion (3) pour l'actionnement automatique de l'obturateur.

7. Appareil à infusion selon l'une quelconque des revendications 2 ou 3 et la revendication 6,
**caractérisé en ce que** ladite pièce unique consiste en une manette (8') montée pivotante en une extrémité (83') solidaire du couvercle (2), et dont l'extrémité libre (81') forme ledit ergot venant en prise avec la seconde extrémité libre (6b) dudit second bras (6).

8. Appareil à infusion selon l'une quelconque des revendications 2 à 7,
**caractérisé en ce que** le couvercle comporte en outre des moyens élastiques (9) de maintien du clapet (4) dans une position de repos dans laquelle l'ouverture (21) est obturée.

9. Appareil à infusion selon la revendication 8,
**caractérisé en ce que** lesdits moyens élastiques comportent un ressort (9) possédant une extrémité reliée au couvercle (2) et une extrémité reliée au premier bras (5), entre le clapet (4) et le premier axe de rotation (b₁), ledit ressort étant comprimé lors de l'actionnement de l'obturateur en vue de libérer l'ouverture (21).

## Claims

1. Infusion apparatus of the type having a collecting pot (1) able to be placed under the outlet orifice (30) of an infusion chamber (3), said pot having a lid (2) provided with an opening (21) through which the infusion enters, and an obturator (4 to 7) for the opening in order notably to keep the collected infusion at an optimum temperature, means (8 ; 8') for actuating the obturator also being provided with a view to automatically releasing the opening under the action of a stop (31) fixed to the apparatus, when the pot is put in position under the outlet orifice, said actuation means (8 ; 8') being able also to be controlled manually with a view to releasing the opening and allowing extraction of the infusion collected in the pot through said opening,
**characterized in that** the lid (2) includes the actuation means comprising a single piece (8 ; 8) able to be set in movement either manually, or automatically when the pot is put in place under the outlet orifice, and to actuate the obturator (4 to 7) when it is set in movement.

2. Infusion apparatus according to claim 1,
**characterized in that**, the infusion collecting pot (1) having a pouring spout (17) opposite which the opening (21) is situated, the obturator (4 to 7) comprises a valve (4) placed inside the pot (1) below the opening (21) and mechanically connected to the lid (2) through the opening by means of a first arm (5) mounted so as to pivot in the lid about a first axis of rotation (b₁), and a second arm (6) also mounted so as to pivot in the lid about a second axis of rotation (b₂), said second arm (6) having a first end (6a) connected to the first arm by an articulation (7) and a second free end (6b) ; and in that the single piece (8 ; 8') has at least one first pressing area (80 ; 80') for manually setting the piece in movement, and a stud (81 ; 81') exerting, when said piece is set in movement, a force on the second free end (6b) of the second arm (6) so as to impart, to the first and second arms, two opposite rotation movements moving the valve (4) away from the opening (21).

3. Infusion apparatus according to claim 2,
**characterized in that**, the collecting pot comprising a lateral handle (18) on one side of the pot opposite to the pouring spout (17), the first pressing area (80 ; 80') is accessible from the top of the lid (2) and situated above and close to the lateral handle (18) so as to, enable the user to exert a pressure on the first pressing area (80 ; 80') whilst holding the pot by the handle.

4. Infusion apparatus according to claim 3,
**characterized in that** the single piece consists of a lever (8) mounted so as to float, extending longitudinally between the pouring spout (17) and the handle (18) of the pot, above the first (5) and second (6) arms, in that the lever has, on the same side as the pouring spout (17), a second pressing area (82) on which the stop (31) exerts a pressure when the pot is put in position on the apparatus ; and in that the stud (81) is situated between the first and second pressing areas (80, 82) and extends laterally with respect to the longitudinal axis of the lever so as to exert said force on the second free end (6b) of the second arm following a pressure on either one of the first or second pressing areas.

5. Infusion apparatus according to claim 4,
**characterized in that** the lid (2) comprises two abutment points (22 ; 23) situated on each side of the stud (81) and forming alternately a pivot for the lever (8) depending on whether a pressure is exerted on the first or second pressing area.

6. Infusion apparatus according to either one of claims 2 or 3,
**characterized in that** the stop (31) is situated on the apparatus so as to be able to exert a pressure on the first pressing area (80 ; 80') when the pot is put in position under the outlet orifice (30) of the infusion chamber (3) for the automatic actuation of the obturator.

7. Infusion apparatus according to either one of claims 2 or 3 and claim 6,
**characterized in that** the single piece consists of a lever (8') mounted so as to pivot at one end (83') fixed to the lid (2), and the free end (81') of which forms the stud coming into engagement with the second free end (6b) of the second arm (6).

8. Infusion apparatus according to claims 2 to 7,
**characterized in that** the lid further comprises elastic means (9) for holding the valve (4) in an idle position in which the opening (21) is closed.

9. Infusion apparatus according to any one of claim 8,
**characterized in that** the elastic means include a spring (9) having one end connected to the lid (2) and one end connected to the first arm (5), between the valve (4) and the first axis of rotation (b₁), said spring being compressed when the obturator is actuated with a view to releasing the opening (21).

## Patentansprüche

1. Brühgetränkevorrichtung vom Typ mit einer Auffangkanne (1), die unter die Auslauföffnung (30) einer Brühkammer (3) gestellt werden kann, wobei die Kanne einen Deckel (2) aufweist, der mit einer Öffnung (21), durch die das Brühgetränk hineinläuft, und mit einem Verschluß (4 bis 7) dieser Öffnung versehen ist, um insbesondere das aufgefangene Brühgetränk bei einer optimalen Temperatur zu halten, wobei außerdem Betätigungsmittel (8, 8') des Verschlusses vorgesehen sind, um die Öffnung unter der Wirkung eines mit der Vorrichtung fest verbundenen Anschlags (31) automatisch freizugeben, wenn die Kanne unter die Auslauföffnung gebracht wird, und die Betätigungsmittel (8, 8') auch von Hand steuerbar sind, um die Öffnung freizugeben und das Ausgießen des in der Kanne aufgefangenen Brühgetränks durch die Öffnung zu ermöglichen, **dadurch gekennzeichnet, daß** der Deckel (2) die Betätigungsmittel aufweist, die ein einziges Teil (8, 8') umfassen, das entweder von Hand oder beim Einsetzen der Kanne unter die Auslauföffnung automatisch bewegbar ist und bei seiner Bewegung den Verschluß (4 bis 7) betätigt.

2. Brühgetränkevorrichtung nach Anspruch 1, **dadurch gekennzeichnet, daß** die zum Auffangen des Brühgetränks dienende Kanne (1) eine Ausgußschnauze (17) aufweist, der gegenüber die Öffnung (21) angeordnet ist, wobei der Verschluß (4 bis 7) eine im Inneren der Kanne (1) unter der Öffnung (21) angeordnete Klappe (4) aufweist, die mechanisch mit dem Deckel (2) durch die Öffnung mittels eines ersten Arms (5) mechanisch verbunden ist, der im Deckel um eine erste Drehachse (b1) schwenkbar montiert ist, und mittels eines zweiten Arms (6) verbunden ist, der ebenfalls im Deckel um eine zweite Drehachse (b2) schwenkbar montiert ist, wobei der zweite Arm (6) ein mit dem ersten Arm durch ein Gelenk (7) verbundenes erstes Ende (6a) und ein freies Ende (6b) aufweist, wobei ferner das einzige Teil (8; 8') mindestens eine erste Druckzone (80; 80') für die manuelle Bewegung des Teils und einen Zapfen (81; 81') aufweist, der beim Bewegen des Teils eine Kraft auf das zweite freie Ende (6b) des zweiten Arms (6) so ausübt, daß dem ersten und zweiten Arm zwei entgegengesetzte Drehbewegungen aufgezwungen werden, welche die Klappe (4) von der Öffnung (21) entfernen.

3. Brühgetränkevorrichtung nach Anspruch 2, **dadurch gekennzeichnet, daß** die Auffangkanne einen seitlichen Handgriff (18) an einer Seite der Kanne aufweist, welche der Ausgußschnauze (17) entgegengesetzt ist, daß die erste Druckzone (80; 81) von oberhalb des Deckels zugänglich und oberhalb und in der Nähe des seitlichen Handgriffs (18) angeordnet ist, so daß der Benutzer einen Druck auf die erste Druckzone (80; 80') ausüben kann, während er die Kanne am Griff hält.

4. Brühgetrankevorrichtung nach Anspruch 3, **dadurch gekennzeichnet, daß** das einzige Teil aus einem lose (schwimmend) montierten Hebel (8) besteht, der sich längs zwischen der Ausgußschnauze (17) und dem Handgriff (18) der Kanne oberhalb des ersten Arms (5) und des zweiten Arms (6) erstreckt, wobei der Hebel auf der Seite der Ausgußschnauze (17) eine zweite Druckzone (82) aufweist, auf welche der Anschlag (31) beim Aufsetzen der Kanne auf die Vorrichtung einen Druck ausübt, und daß der Zapfen (81) zwischen der ersten und zweiten Druckzone (80, 82) angeordnet ist und sich seitlich bezüglich der Längsachse des Hebels erstreckt, so daß er bei einem Druck auf eine beliebige der ersten oder zweiten Druckzone die Kraft auf das freie zweite Ende (6b) des zweiten Armes ausübt.

5. Brühgetränkevorrichtung nach Anspruch 6, **dadurch gekennzeichnet, daß** der Deckel (2) zwei beiderseits des Zapfens (81) angeordnete Anschlagpunkte (22; 23) aufweist, die alternativ einen Drehpunkt für den Hebel (8) bilden, je nachdem, ob man einen Druck auf die erste oder die zweite Druckzone ausübt.

6. Brühgetränkevorrichtung nach einem der Ansprüche 2 oder 3, **dadurch gekennzeichnet, daß** der Anschlag (31) an der Vorrichtung so angeordnet ist, daß er beim Aufstellen der Kanne unter der Auslauföffnung (30) der Brühkammer (3) einen Druck auf die erste Druckzone (80; 80') ausüben kann, um den Verschluß automatisch zu betätigen.

7. Brühgetränkevorrichtung nach einem der Ansprüche 2 oder 3 und Anspruch 6, **dadurch gekennzeichnet, daß** das einzige Teil aus einem Bedienungselement (8') besteht, das an einem mit dem Deckel (2) fest verbundenen Ende (83') schwenkbar montiert ist und dessen freies Ende (81') den Zapfen bildet, der am zweiten freien Ende (6b) des zweiten Arms (6) angreift.

8. Brühgetränkevorrichtung nach einem der Ansprüche 2 bis 7, **dadurch gekennzeichnet, daß** der Deckel außerdem elastische Mittel (9) aufweist, welche die Klappe (4) in einer Ruhestellung halten, in welcher die Öffnung (21) verschlossen ist.

9. Brühgetränkevorrichtung nach Anspruch 8, **dadurch gekennzeichnet, daß** die elastischen Mittel eine Feder (9) aufweisen, die ein mit dem Deckel (2) verbundenes Ende und ein mit dem Arm (5) verbundenes Ende aufweist und zwischen der Klappe (4) und der ersten Drehachse (bl) angeordnet ist, wobei die Feder bei der Betätigung des Verschlusses zur Freigabe der Öffnung (21) zusammengedrückt wird.
